# EUROPÄISCHE PATENTSCHRIFT

(11) **EP 1 694 985 B1**
(45) Veröffentlichungstag und Bekanntmachung des Hinweises auf die Patenterteilung: **24.09.2008**
(21) Anmeldenummer: 04820054.7
(22) Anmeldetag: 23.11.2004
(51) Int. Cl.: F16H 55/06, B23P 15/14

(54) **LAUFVERZAHNUNG UND HERSTELLUNGSVERFAHREN FÜR EINE SOLCHE**
TOOTHED GEARING AND METHOD FOR THE PRODUCTION THEREOF
DENTURE DE ROULEMENT ET PROCEDE DE FABRICATION

(30) Priorität: 13.12.2003 DE 10358503
(43) Veröffentlichungstag der Anmeldung: 30.08.2006
(73) Patentinhaber: Daimler AG, 70327 Stuttgart (DE)
(72) Erfinder: ZEISE, Dirk, 34127 Kassel (DE)
(86) Internationale Anmeldenummer: PCT/EP2004/013262
(87) Internationale Veröffentlichungsnummer: WO 2005/057052

(56) Entgegenhaltungen:
- WO-A-02/24397
- DE-A1- 2 926 255
- DE-A1- 10 147 681
- GB-A- 1 346 174
- US-A- 4 028 992

## Beschreibung

Die Erfindung betrifft gemäß Patentanspruch 1 ein Herstellungsverfahren für eine Laufverzahnung. Ein solches Verfahren ist aus der GB 1346174 bekannt.

Aus der DE-OS 29 26 255 ist bereits ein Zahnrad bekannt, das mit einer Laufverzahnung und einer Schaltverzahnung ausgeführt ist. Die Schaltverzahnung ist dabei elektrochemisch oder elektroerosiv oder durch Feinschmieden hergestellt. Eine Hinterlegung der Schaltverzahnung erfolgt dabei elektrochemisch oder elektroerosiv.

Aufgabe der Erfindung ist es, einen breiten geometrischen Gestaltungspielraum für Laufverzahnungen zu schaffen.

Diese Aufgabe wird erfindungsgemäß mit den Merkmalen von Patentanspruch 1 gelöst.

Sowohl das Präzisionsschmieden als auch das Feingießen ermöglichen die kostengünstige Herstellung von Hypoidverzahnungen oder von anderen komplexen Laufverzahnungsgeometrien.

Mittels einer elektrochemischen Fertigbearbeitung dieser präzisionsgeschmiedeten oder feingegossenen Laufverzahnung lassen sich kostengünstig Laufverzahnungen mit breitem geometrischen Gestaltungsspielraum herstellen.

Bei der elektrochemischen Fertigbearbeitung wird mit einer formgebenden Elektrode unter Zuführung eines Elektrolyten und anlegen einer Spannung Material an dem mit der Laufverzahnung versehenen Werkstück abgetragen.

In besonders vorteilhafter Weise wird bei der Auswahl der Geometrie des Werkstückes und der Elektrode die Zuführbarkeit und Entformbarkeit in einer Richtung zu berücksichtigt. Dies ermöglicht die problemlose maschinelle Massenbearbeitung des Werkstückes bzw. der Laufverzahnung.

In einer besonders vorteilhaften Ausgestaltung der Erfindung werden alle Zähne des Tellerrades komplett in einem einzigen Arbeitsschritt bearbeitet. Da die Genauigkeit der Verzahnung hauptsächlich von der Genauigkeit der Elektrode abhängt, wird eine hohe Prozessgenauigkeit bzw. Wiederholbarkeit erreicht. Mit dem Verfahren können auch schwer bearbeitbare Werkstoffe und sogar gehärtete Werkstoffe gefertigt werden. Ein solcher schwer bearbeitbarer Werkstoff ist beispielsweise wärmebehandelter austenitisch duktiler Eisenwerkstoff.

In besonders vorteilhafter Weise können Versteifungsrippen oder Versteifungsdeckel vorgesehen sein, die sich zwischen zumindest zwei Zähnen der Laufverzahnung erstrecken. Damit wird in vorteilhafter Weise eine sehr hohe Biegesteifigkeit der Zähne erreicht, womit auch die Zahnfußfestigkeit sehr hoch wird. In besonders vorteilhafter Weise sind sogar geometrische Verstärkungsmaßnahmen möglich, bei denen sich bei konventioneller Fräs-, Schleif- oder Läppbearbeitung die Werkzeugbahnen kreuzen oder durchdringen würden. Mit der Erhöhung der Biegesteifigkeit gehen Vorteile hinsichtlich der Laufruhe und der Lebensdauer der Laufverzahnung einher. In vorteilhafter Weise sind größere Steigerungen der Drehmomentübertragungsfähigkeit zu erzielen, als beispielsweise mit sonstigen Verfahren zur Optimierung der Verzahnungsgeometrie oder von Oberflächenbeschichtungen.

Da keine Rücksicht auf Werkzeugbahnen genommen werden muss, sind alle erdenklichen Verzahnungs- und Versteifungsgeometrien darstellbar. Diese Versteifungen können in Umfangsrichtung des Zahnrades laufen. Beispielsweise können die Versteifungsgeometrien am Außen-, bzw. Innendurchmesser, oder in der Mitte der Zahnbreite verlaufen. Auch Verstärkungen im Zahnfuß durch belastungsangepasste Zahnfußausrundungen sind möglich.

In besonders vorteilhafter Weise kann auf der Rückseite von Kegelrädern eine Versteifungsmaßnahme - wie beispielsweise ein Versteifungsdeckel - vorgesehen sein, was zu einem erheblichen Anstieg der Zahnfußfestigkeit führt.

Kegelräder mit Verstärkungsdeckeln sind in besonders vorteilhafter Weise auch in einer Komplettbearbeitung herstellbar. Sind solche Kegelräder mit einer Spiralverzahnung versehen, so können zusätzlich zu der transversalen Zusammenführung von Kegelrad und Elektrode auch noch diese beiden Teile in der Größe des vorhandenen Spiralwinkels relativ gegeneinander rotiert werden. D.h., das Kegelrad wird in das Elektrode hinein und wieder herausgedreht bzw. die Elektrode wird auf das Kegelrad heraufgeschraubt und wieder herunterschraubt.

In besonders vorteilhafter Weise sind auch Zahnräder mit beidseitigem Verstärkungsdeckel herstellbar. Solche Zahnräder weisen eine noch höhere Zahnfußfestigkeit auf. Diese Zahnräder können dabei in besonders vorteilhafter Weise erzeugt werden, indem eine Elektrode, welche die Negativform eines einzelnen Zahnzwischenraumes aufweist, radial in den Zahnzwischenraum eingeführt wird. Dabei kann in besonders vorteilhafter Weise vorgesehen sein, dass die Elektrode in einer Richtung entformbar ist. Nach Fertigbearbeitung des Zahnzwischenraumes wird das Zahnrad um die Zahnteilung weitergedreht. Dies wird solange fortgeführt, bis das Zahnrad komplett bearbeitet ist. Zur Erhöhung der Bearbeitungsgeschwindigkeit, ist bei diesem Verfahren auch eine mehrseitige Bearbeitung möglich, indem mehrere Elektroden gleichzeitig in die Zahnzwischenräume eingeführt werden. Dieses Verfahren bietet sich in besonders vorteilhafter Weise für beidseitige mit Verstärkungsdeckeln versehenden Stirnräder - insbesondere schrägverzahnte Stirnräder - an. Wenn nicht beidseitig Verstärkungsdeckel vorgesehen sind, ist es auch möglich die Elektrode bzw. Elektroden mit der Negativform aus einer anderen Richtung, als der radialen Richtung, zur elektrochemischen Bearbeitung zuzuführen.

Zur weiteren Erhöhung der Bearbeitungsgeschwindigkeit, ist bei diesem Bearbeitungsverfahren, bei dem einzelne Elektroden in jeweils einen Zahnzwischenraum eingefahren werden neben der besagten mehrseitigen Bearbeitung auch eine Mehr-Werkstück-Bearbeitung möglich. Dabei werden mehrere Elektroden an einer Zuführeinheit synchron in das Werkstück gefahren. Nach Fertigstellung der Zahnzwischenräume, werden die Werkstücke um die Zahnteilung weitergedreht. Dies wird solange fortgeführt, bis die Zahnräder komplett bearbeitet sind.

Für das erfindungsgemäße Bearbeitungsverfahren muss in besonders vorteilhafter Weise kein besonderer Werkzeugeinlauf oder -auslauf für eine Fräs-, Schleif- oder Läppbearbeitung vorgesehen werden. Demzufolge müssen bei der erfindungsgemäßen kompletten Bearbeitung komplexer Laufverzahnungsgeometrien in vorteilhafter Weise keine mehrteiligen Baugruppen konstruktiv vorgesehen werden, die nach der Verzahnungsfertigung zusammengefügt werden müssten, wie die beispielsweise beim Tellerrad eines Ausgleichsgehäuses der Fall ist. Es kann im Beispiel des einteiligen Tellerrad-Ausgleichsgehäuse-Verbundes eine ringförmige Elektrode vorgesehen werden, die koaxial zum Ausgleichsgehäuse über letzteres gestülpt wird und in einer Stellung im Bereich der vorgearbeiteten Laufverzahnung letztere elektrochemisch in einem Bearbeitungsschritt fertigbeabeitet. Heute noch notwendige Baugruppenschnittstellen können somit nicht nur im Fall des Ausgleichsgehäuses eliminiert werden. Alle durch das erfindungsgemäße Verfahren ermöglichten Maßnahmen zeigen in Summe ein hohes Kosteneinsparungspotential.

In besonders vorteihafter Weise sind Bearbeitungsmaschinen zur Herstellung der teilweise komplexen Verzahnungsgoemetrien denkbar, die nach dem erfindungsgemäßen Verfahren arbeiten. Diese erfindungsgemäßen Bearbeitungsmaschinen mit einer oder mehrerer Elektroden und einem Elektrolytbad sind weniger aufwändig, als die die derzeit üblichen spanend arbeitenden Verzahnungsmaschinen. Damit ist in vorteilhafter Weise die Abhängigkeit des Laufverzahnugsherstellers von den wenigen Maschinenanbietern geringer.

Ein besonders vorteilhaftes Anwendungsgebiet der Erfindung ist das Achsgetriebe. So ist es möglich das Ausgleichgehäuse mit dem Tellerrad in einem Bauteil mit wenigen zehntel mm Aufmaß vorzuschmieden bzw. vorzugießen. Eine aufwendige, hochbelastete und teure Schnittstelle wird damit eliminiert.

Die Erfindung kann in besonders vorteilhafter Weise Anwendung bei einem Kronenraddifferential gemäß
- DE 101 44 200.9
- DE 103 39 425.7
- DE 102 52 012.7-12
- DE 103 08 800.8
- DE 103 17 503.2
- DE 103 39 423.0
- DE 103 39 424.9
finden, deren Inhalt hiermit als in dieser Anmeldung aufgenommen gelten soll.

Die Erfindung kann ferner in besonders vorteilhafter Weise Anwendung bei Verzahnungen mit einem Verstärkungsdeckel gemäß EP 1298353 A2 finden, deren Inhalt hiermit als in dieser Anmeldung aufgenommen gelten soll.

Weitere Vorteile der Erfindung gehen aus den weiteren Patentansprüchen, der Beschreibung und der Zeichnung vor.

Die Erfindung ist nachfolgend anhand mehrerer Ausführungsbeispiele erläutert.

Dabei zeigen:
- Fig. 1: ein Gehäuse eines Kronenraddifferentials mit einem einteilig angeformten Tellerrad und einer Elektrode zur elektrochemischen Bearbeitung einer Laufverzahnung des Tellerrades,
- Fig. 2: das Gehäuse aus Fig. 1, wobei die Elektrode zur elekrochemischen Bearbeitung an die Laufverzahnung bis auf einen Spülspalt herangefahren ist,
- Fig. 3: ein Kronenraddifferential in einer geschnittenperspektivischen Darstellung, wobei durch eine Ebene geschnitten wird, welche zwischen einer Rotationsachse des Kronenraddifferentials und einer geometrischen Achse von Ausgleichsrädern aufgespannt wird und wobei das Kronenraddifferential ein Gehäuse gemäß Fig. 1 und Fig. 2 und Ausgleichsräder gemäß Fig. 17 bis Fig. 20 aufweist, die beidseitig mit Verstärkungsdeckeln versehen sind,
- Fig. 4: das Kronenraddifferential aus Fig. 3 in einem Schnitt,
- Fig. 5: eine zweite Ausgestaltungsform eines Gehäuses für ein Kronenraddifferential, wobei eine Laufverzahnung eines Tellerrades eine Versteifungsrippe aufweist,
- Fig. 6: die Laufverzahnung mit der Versteifungsrippe aus Fig. 5 in einem Detail,
- Fig. 7: ein Kegelritzel eines Kronenraddifferentials mit einem einteilig angeformten Verstärkungsdeckel,
- Fig. 8: das Kegelritzel aus Fig. 7 in einer anderen Ansicht,
- Fig. 9: eine sich zum Einfahren des Kegelritzels aus Fig. 7 und Fig. 8 drehende Elektrode zur Endbearbeitung einer Laufverzahnung,
- Fig. 10: das Kegelritzels aus Fig. 7 bis Fig. 9, wobei die Elektrode zur elekrochemischen Bearbeitung an die Laufverzahnung bis auf einen Spülspalt herangefahren ist,
- Fig. 11: die sich zum Ausfahren des Kegelritzels aus Fig. 7 bis Fig. 10 drehende Elektrode,
- Fig. 12: eine Ritzelwelle eines Kronenraddifferentials in einer weiteren Ausgestaltungsform, wobei das mit einer Spiralverzahnung versehene Kegelrad beidseitig jeweils einen Verstärkungsdeckel aufweist,
- Fig. 13: die Ritzelwelle aus Fig. 12 und eine Elektrode zur Endbearbeitung der Spiralverzahnung, wobei die Führungsrichtung der Elektrode mittels eines Pfeils dargestellt ist,
- Fig. 14: die Ritzelwelle aus Fig. 12 und Fig. 13, wobei eine Elektrode bis auf einen Spülspalt an die Spiralverzahnung herangefahren ist,
- Fig. 15: eine Vorrichtung bzw. ein Verfahren zur Bearbeitung mehrer Ritzelwellen gemäß Fig. 12 bis Fig. 14, wobei mehrere Elektroden leitend miteinander verbunden sind,
- Fig. 16: die Vorrichtung bzw. das Verfahren gemäß Fig. 15, wobei die Elektroden bis auf einen Spülspalt in die Zahnzwischenräume der Spiralverzahnung eingetaucht sind,
- Fig. 17: ein beidseitig mit Verstärkungsdeckeln versehenes Zahnrad, welches von zwei diametral zueinander liegenden Elektroden angefahren wird,
- Fig. 18: das Zahnrad aus Fig. 17, wobei die beiden Elektroden in diametral zueinander liegenden Zahnzwischenräumen des Zahnrade eingeschoben sind,
- Fig. 19: Zahnräder - insbesondere Ausgleichsräder -, welche beidseitig mit Verstärkungsdeckeln versehen sind, in einer Vorrichtung zur Mehrfachbearbeitung und
- Fig. 20: die Vorrichtung bzw. ein Verfahren gemäß Fig. 19, wobei Elektroden bis auf einen Spülspalt in Zahnzwischenräume der Zahnräder eingetaucht sind.

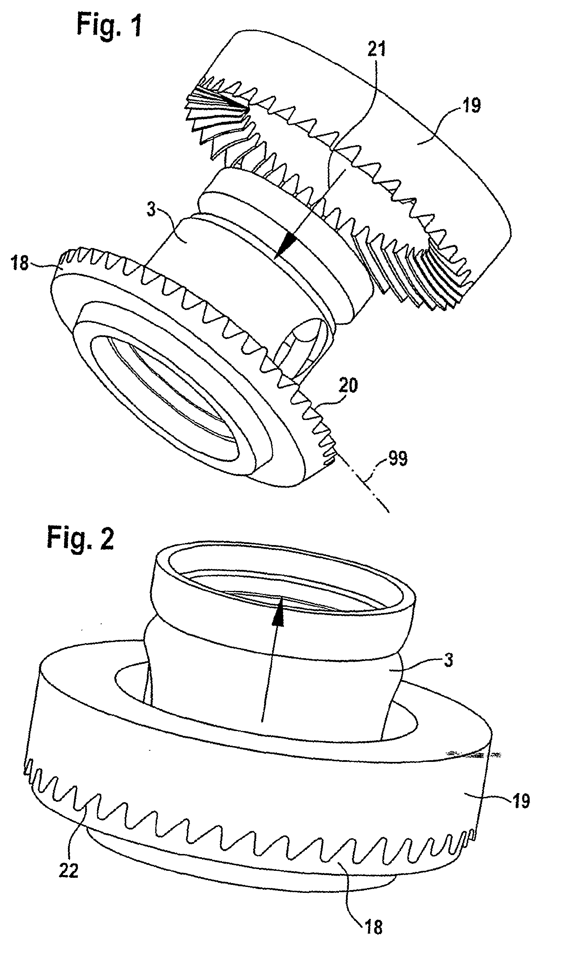

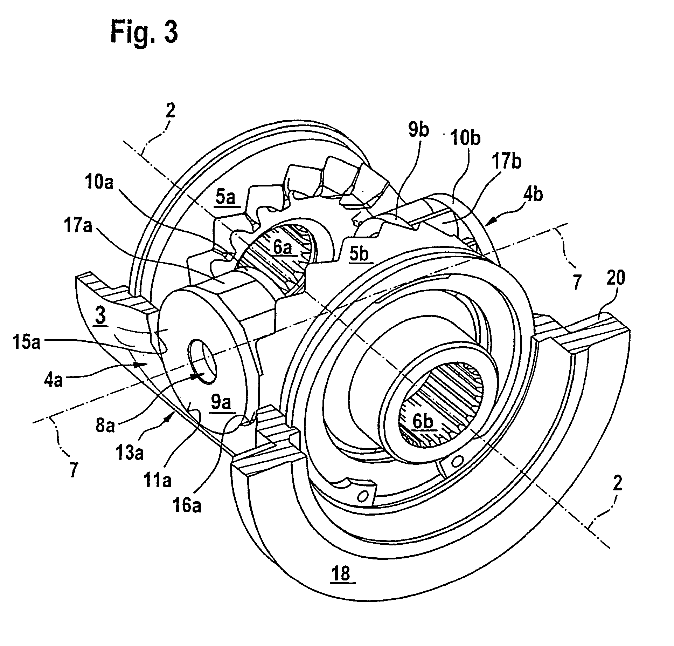

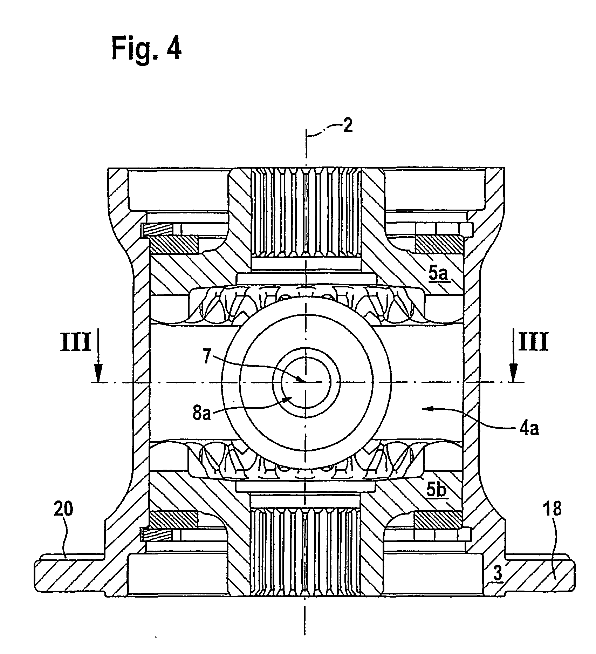

Fig. 1 zeigt ein Gehäuse 3 eines Kronenraddifferentials. Das Kronenraddifferential ist im zusammengebauten Zustand gemäß Fig. 3 und Fig. 4 ausgeführt. Dabei ist ein Tellerrad 18 an das Gehäuse 3 einteilig angeformt. Eine Laufverzahnung 20 des Tellerrades 18 ist dabei eine Hypoidverzahnung. Die Herstellung des Gehäuses 3 mit dem Tellerrad 18 aus einem einzigen Teil kann insbesondere mittels
- Präzisionsschmieden oder
- Feingießen
erfolgen. Das Gehäuse 3 ist dabei mit 3/10mm bis 5/10mm Aufmaß aus einem wärmebehandelten austenitisch duktilen Eisenwerkstoff vorgeschmiedet bzw. vorgegossen.

In der Aufspannung in einer nicht näher dargestellten elektrochemischen Bearbeitungsmaschine ist eine Elektrode 19 koaxial zu einer Rotationsachse des Gehäuses 3 ausgerichtet. Die Elektrode 19 besteht dabei aus einem ringförmigen Grundkörper, auf dessen der Laufverzahnung 20 zugewandter Seite im wesentlichen eine Negativform der Laufverzahnung 20 eingearbeitet ist. Gemäß dem Pfeil 21 wird die Elektrode 21 koaxial auf die Laufverzahnung 20 des Tellerrades 18 zugefahren, bis gemäß Fig. 2 nur noch ein Spülspalt 22 von ca. 1/100mm zwischen der Elektrode und der Laufverzahnung frei bleibt. Um diesen Spülspalt und das besagte Aufmaß zu berücksichtigen, ist die Negativform etwas kleiner, als die eine fertig bearbeitete Kontur der Laufverzahnung 20. Da die Bewegungsrichtung der Elektrode 19 koaxial zur Rotationsachse des Gehäuses 3 liegt, muss radial innerhalb der Laufverzahnung 20 kein Platz für einen Werkzeugauslauf vorgehalten werden. Demzufolge schließt sich radial innerhalb der Laufverzahnung das Gehäuse 3 fast unmittelbar an. Bei spanender bzw. schleifender Bearbeitung wäre dies nicht möglich, da für die Verlaufsbahn 99 eines Fräsers bzw. Schleifsteins radial innerhalb der Laufverzahnung 20 einen Werkzeugauslauf hätte vorgehalten werden müssen.

Im in Fig. 2 dargestellten Zustand ist das Tellerrad 18 und die Elektrode 19 in ein Elektrolytbad eingetaucht. Wird nun das Gehäuse 3 einerseits an einen Pol einer Gleichstromquelle und die Elektrode 19 an einen anderen Pol der selben Gleichstromquelle angeschlossen, so liegt eine Spannung zwischen dem Gehäuse 3 und der Elektrode 19 an, die über das leitfähige Elektrolyt gleichmäßig Material von der Oberfläche der Laufverzahnung 20 abträgt. Dabei wird solange Material abgetragen, bis sich die Fertigkontur der Laufverzahnung 20 gebildet hat. Mittels dieses Verfahrens werden somit sämtliche Zähne der Laufverzahnung 20 in einem einzigen Bearbeitungsschritt fertigbearbeitet.

Nach der elektrolytischen Fertigbearbeitung wird die Elektrode 19 gemäß dem Pfeil wieder aus den Zahnzwischenräumen der Laufverzahnung 20 des Tellerrades 18 herausgezogen.

Fig. 3 zeigt das Kronenraddifferential 1 in einer geschnitten-perspektivischen Darstellung, wobei durch eine Ebene geschnitten wurde, welche zwischen einer Rotationsachse 2 des Kronenraddifferentials 1 bzw. von Kronenrädern 5a, 5b und einer geometrischen Achse 7 von Ausgleichsrädern 4a, 4b aufgespannt wird.

Dieses Kronenraddifferential 1 umfasst das zylindrisches Gehäuse 3, dessen Rotationsachse 2 in üblicher Weise deckungsgleich mit einer geometrischen Achse von nicht näher dargestellten Achswellen ist.

An einem axialen Ende ist das Gehäuse 3 einteilig mit dem Tellerrad 18 ausgestaltet.

Das Gehäuse 3 weist axial mittig zwei diametral gegenüberliegende Gehäuseausnehmungen 13a, 13b auf, in welchen die geradverzahnten Ausgleichsräder 4a, 4b bezüglich deren geometrischer Achse 7 radial gelagert sind. Die Gehäuseausnehmung 13b ist dabei in Fig. 4 ersichtlich. Die Ausgleichsräder 4a, 4b weisen eine Stirnverzahnung 17a bzw. 17b auf. Die geometrischen Achse 7 steht senkrecht zur Rotationsachse 2. Zentrisch in diesen Ausgleichsrädern 4a, 4b sind Ausnehmungen 8a, 8b angeordnet, von denen die eine Ausnehmung 8b in Fig. 3 ersichtlich ist. Jedes der beiden Ausgleichsräder 4a bzw. 4b weist bezüglich dessen Achse 7 axial oberseitig und unterseitig jeweils einen scheibenförmigen Verstärkungsdeckel 9a, 10a bzw. 9b, 10b auf, durch welchen ebenfalls die Ausnehmungen 8a, 8b verlaufen. Diese scheibenförmigen Verstärkungsdeckel 9a, 10a bzw. 9b, 10b sind im Gehäuse 3 radial in teilkreisförmigen Randbereichen 11a, 12a, 20a, 14a bzw. 11b, 12b, 20b, 14b der beiden Gehäuseausnehmungen 13a, 13b gelagert, von denen in der Fig. 3 nur der eine teilkreisförmigen Randbereichen 11a ersichtlich ist. Diese teilkreisförmigen Randbereichen 11a, 12a, 20a, 14a, 11b, 12b, 20b, 14b liegen bezüglich der Rotationsachse 2 in Umfangsrichtung um über eine möglichst große Fläche ein Antriebsmoment vom Gehäuse 3 auf die Ausgleichsräder 4a, 4b zu übertragen. In axialer Richtung weisen die Gehäuseausnehmungen 13a, 13b von den Ausgleichsrädern beabstandete Randbereiche 15a, 15b, 16a, 16b auf, die einen Schmiermitteldurchfluss und damit eine sichere Schmiermittelversorgung für die Radiallagerung der Ausgleichsräder 4a, 4b und für einen Verzahnungseingriff gewährleisten. Bei diesem Verzahnungseingriff kämmen die Ausgleichsräder 4a, 4b mit den konzentrisch zur Rotationsachse 2 ausgerichteten Kronenrädern 5a, 5b, welche mittels einer Keilwellenverzahnung die nicht näher dargestellten Achswellen drehfest aufnehmen. Die Kronenräder 5a, 5b sind in der axial voneinander weg weisenden Richtung mittels eines axialen Sicherungsringes DIN 472 gegen eine Verschiebung in diese Richtung gegenüber dem Gehäuse 3 abgestützt. Zwischen dem jeweiligen Kronenrad 5a bzw. 5b und dessen Sicherungsring ist jeweils eine Distanzscheibe zur Einstellung des axialen Abstandes zwischen den beiden Kronenrädern 5a, 5b angeordnet.

Fig. 4 zeigt das Kronenraddifferential 1 aus Fig. 3 in einer geschnitten-zweidimensionalen Darstellung. Zusätzlich ist das über der Schnittebene liegende eine Ausgleichsrad 4a dargestellt.

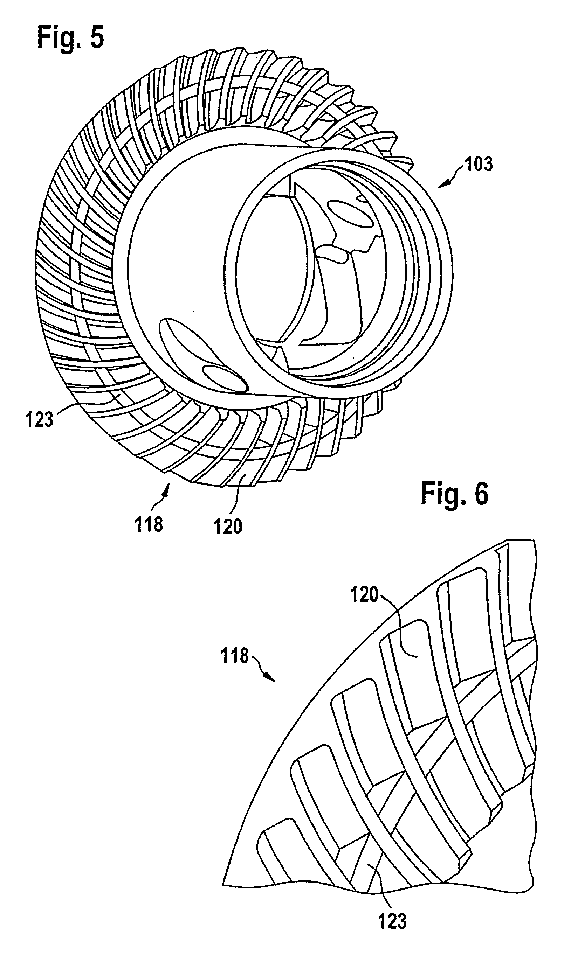

Fig. 5 zeigt ein Gehäuse 103 eines Kronenraddifferentials ähnlich dem gemäß Fig. 1 bis Fig. 4. Das Gehäuse 103 ist mit einem Tellerrad 118 verbunden. Die Fertigungsweise gleicht dem Fertigungsverfahren gemäß Fig. 1 und Fig. 2. Es wird jedoch bereits im Urformprozess - d.h. beim Präzisionsschmieden oder beim Feingießen - eine umlaufende Versteifungsrippe 123 in die Laufverzahnung 120 eingearbeitet. Diese umlaufende Versteifungsrippe 123 ist somit koaxial zur Laufverzahnung 120 des Tellerrades 118 angeordnet, wobei die Versteifungsrippe 123 die Laufverzahnung 120 in zwei radial gleich große Laufringe teilt. Da die Versteifungsrippe 123 somit jeden Zahn von dessen Zahnflanke aus mittig abstützt, ist die Durchbiegung jedes Zahnes gegenüber den Zähnen gemäß erstem Ausführungsbeispiel wesentlich geringer. Ferner ist die Zahnfußfestigkeit sehr hoch. Damit ist auch
- die Lebensdauer der Verzahnung höher
- die Drehmomentübertragungsfähigkeit höher
- die Schwingungsanregung geringer
- das Abwälzgeräusch geringer und
- die Erwärmung der Verzahnung geringer.

Die Höhe der Versteifungsrippe ist dabei gleich der Zahnhöhe der Laufverzahnung 120.

Die Negativform der nicht näher dargestellten Elektrode ist ähnlich der Negativform gemäß Fig. 1 und Fig. 2. Die Negativform für das Tellerrad 118 gemäß Fig. 5 und Fig. 6 weist jedoch auf jedem "Negativzahn" eine mittige Ausnehmung zum elektrochemischen Abtrag der vorgeschmiedeten oder vorgegossenen Verstärkungsrippe 118 auf.

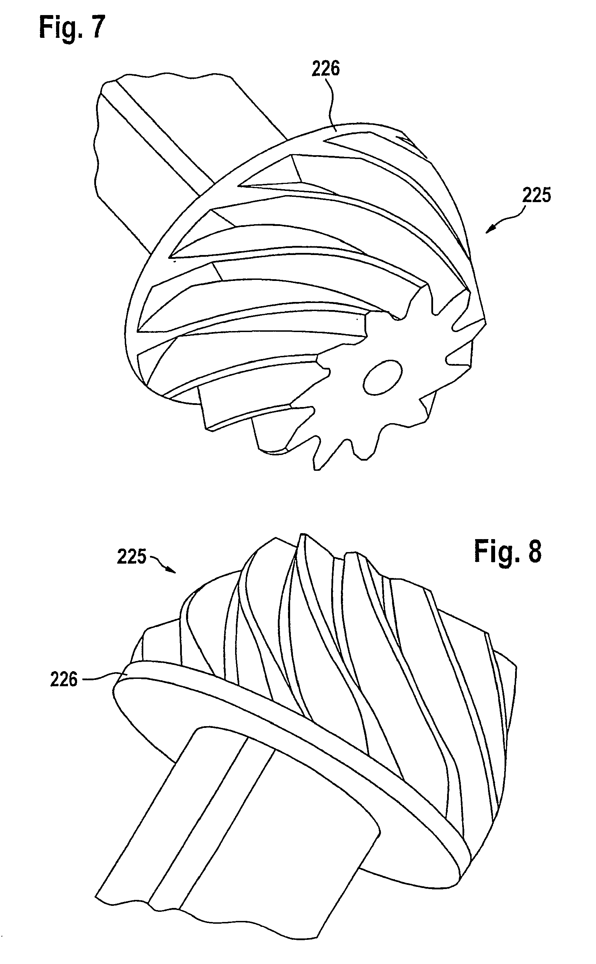

Fig. 7 zeigt ein Kegelritzel 225 eines Kronenraddifferentials, bei welchem eine Laufverzahnung als Hypoidspiralverzahnung ausgeführt ist. Ein solches Kegelritzel 225 kann Anwendung zum Antrieb eines Tellerrades 18 eines Kronenraddifferentials 1 gemäß Fig. 3 und Fig. 4 finden. Das Kegelritzel 225 weist einen einteilig angeformten Verstärkungsdeckel 226 auf, um die Zahnfußfestigkeit besonders hoch auszulegen. Der Verstärkungsdeckel 226 ist dabei auf der Rückseite des Kegelritzels 225 angeformt.

Fig. 8 zeigt das Kegelritzel aus Fig. 7 in einer anderen Ansicht.

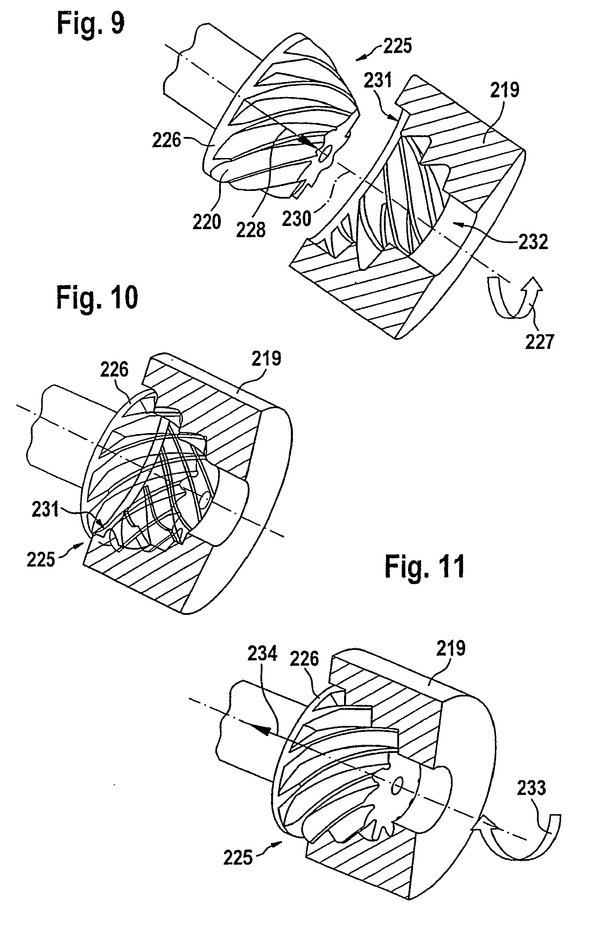

Fig. 9 zeigt neben dem Kegelritzel 225 aus Fig. 7 und Fig. 8 eine sich zum Einfahren des Kegelritzels aus Fig. 7 und Fig. 8 drehende Elektrode zur Endbearbeitung einer Laufverzahnung 220. Die Elektrode 219 dreht sich dabei entsprechend Pfeil 227, während das Kegelritzel 225 in Richtung des Pfeils 228 auf die fluchtend ausgerichtete Elektrode 219 zu geschoben wird. Es dreht sich die Elektrode 219 um die Achse 230. Es wird das Kegelritzel 225 entlang der Achse 230 verschoben und die Elektrode 219 ist ebenso wie das Kegelritzel 225 stets konzentrisch zur gemeinsamen Achse 230 ausgerichtet.

Die Elektrode 219 weist eine Negativform auf, die mit der Hypoidspiralverzahnung und dem Verstärkungsdeckel 226 des Kegelritzels 225 korrespondiert. Neben der Drehrichtung beim Eindrehen der Negativform ist beim Eindrehen des Kegelritzels 225 für den elektrochemischen Endprozess darauf zu achten, dass die Zähne der Laufverzahnung in die Zahnzwischenräume der Elektrode 219 eingefahren werden, so dass es nicht zur Kollision kommt. Damit wird gewährleistet, dass die Elektrode 219 infolge Kontaktfreiheit eine hohe Lebensdauer hat.

Auf die Ausnehmung 231 in der Negativform für den Verstärkungsdeckel 226 kann in einer alternativen Ausgestaltung verzichtet werden.

Fig. 10 zeigt das Kegelritzels 225 wobei die Elektrode zur elekrochemischen Bearbeitung an die Laufverzahnung bis auf einen Spülspalt herangefahren ist. Um
- die sich beim elektrochemischen Prozess unter Umständen bildenden Blasen,
- das infolge des Prozesses aufgewärmte Elektrolyt und
- das beim Einfahren in das Kegelritzel 225 aus der Elektrode 219 zu verdrängende Elektrolyt
abzuführen, ist die Elektrode 219 mit einer durchgehenden Ausnehmung 232 versehen. An dem einen Ende dieser Ausnehmung 232 befindet sich der Elektrolytauslass und an dem anderen Ende wird das Kegelritzel 225 eingeführt.

Fig. 11 zeigt wie sich zum Ausfahren des Kegelritzels 225 die Elektrode 219 gemäß Pfeil 233 dreht, während das Kegelritzel 225 in abgestimmter Geschwindigkeit gemäß Pfeil 234 linear ausfährt.

Beim Fertigungsverfahren gemäß Fig. 9 bis Fig. 11 kann alternativ auch die Elektrode 219 drehfest sein, während das Kegelritzel 225 eingedreht wird. Ebenso könnte die Elektrode 219 axial verschoben werden. Dabei sind beliebige Kombinationen von Verschieblichkeit und Drehbarkeit denkbar, die von der jeweiligen Ausführung der elektrochemischen Bearbeitungsmaschine und der Größe und Form des zu bearbeitenden Werkstücks abhängen.

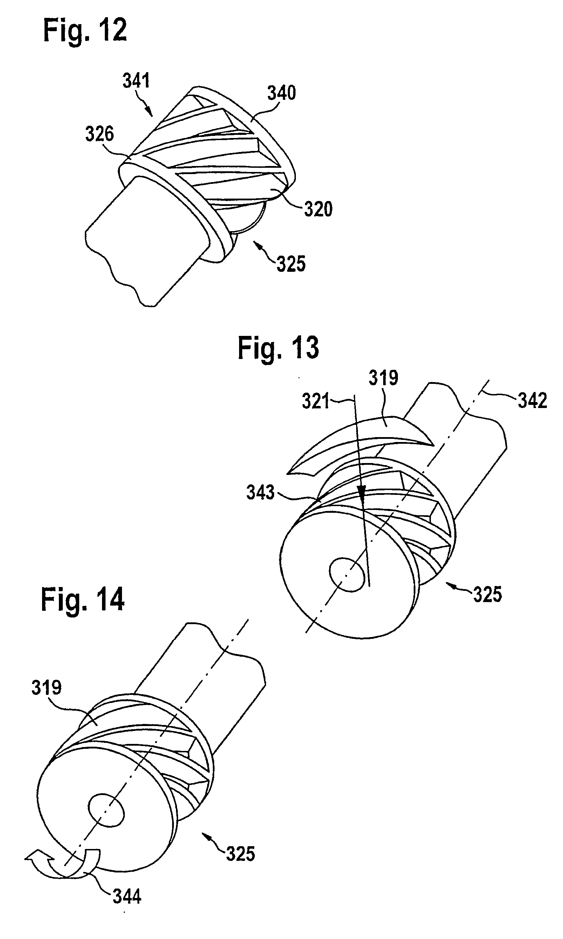

Fig. 12 zeigt eine Ritzelwelle 325 eines Kronenraddifferentials in einer weiteren Ausgestaltungsform. Diese Ritzelwelle 325 kann insbesondere Anwendung zum Antrieb eines Kronenrades dienen, welches das Tellerrad eines Ausgleichsgehäuses bildet, wie dieses beispielsweise aus der EP 1298353 A2 Fig. 7 bekannt ist. Dabei können die Ausgleichsräder sowohl als Kegelräder als auch als Stirnräder entsprechend Fig. 3, Fig. 4 und Fig. 17 bis Fig. 20 der hier vorliegenden Anmeldung ausgeführt sein.

Die Laufverzahnung 320 der Ritzelwelle 325 ist eine Spiralverzahnung die axial beidseitig jeweils einen Verstärkungsdeckel 326 bzw. 340 aufweist. Die beiden Verstärkungsdeckel 326, 340 sind dabei einstückig mit einem Ritzelkopf 341 ausgeführt, so dass die Zähne der Laufverzahnung 320 mit scharfen Kanten in die Verstärkungsdeckel 326, 340 übergehen.

Fig. 13 zeigt die Ritzelwelle 325 aus Fig. 12 und eine Elektrode 319 zur Endbearbeitung der Spiralverzahnung, wobei die Führungsrichtung der Elektrode 319 mittels eines Pfeiles 321 dargestellt ist.

Die Elektrode 319 wird dabei senkrecht zur Längsachse 342 der Ritzelwelle 325 in einen Zahnzwischenraum 343 eingeführt, der durch zwei Zähne und die beiden Verstärkungsdeckel 326, 340 begrenzt wird, so dass sich der in Fig. 14 dargestellte Situation ergibt. In diesem Zahnzwischenraum 343 weist die Elektrode 319 einen Spülspalt zu den beiden Zähnen und den Innenseiten der beiden Verstärkungsdeckel 326, 340 auf, so dass eine Endbearbeitung der vorgeschmiedeten oder vorgegossenen Laufverzahnung 320 möglich ist.

Durch die besondere Formgebung der Elektrode 319 ist sichergestellt, dass die Elektrode 319 nach der Fertigbearbeitung wieder problemlos aus dem Zahnzwischenraum herausziehbar ist. Nachdem die Elektrode 319 herausgezogen wurde, wird die Ritzelwelle 325 um die Längsachse 342 entsprechend dem Pfeil 344 um einen Zahnzwischenraum weitergedreht. Im Anschluss wird die Elektrode 319 in den nächste Zahnzwischenraum eingeführt.

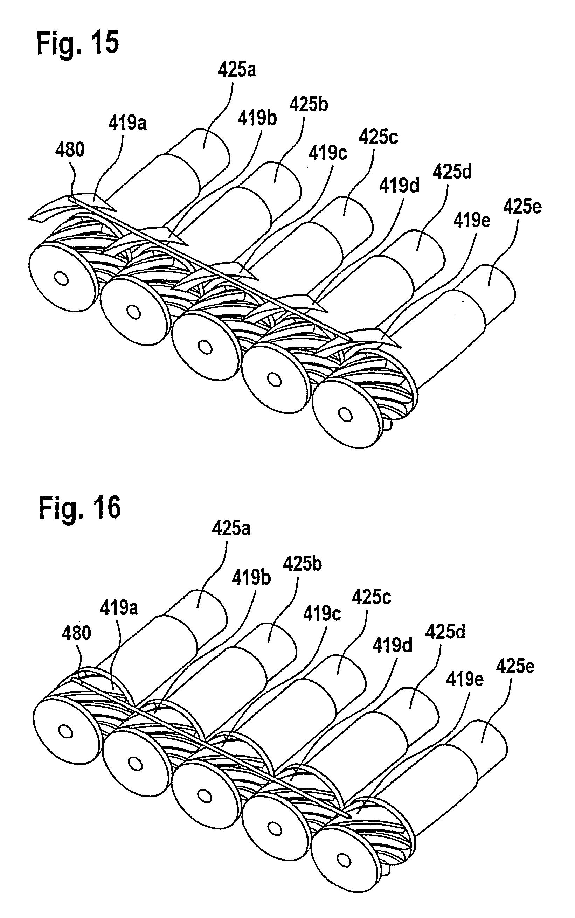

Fig. 15 und Fig. 16 zeigen eine Vorrichtung bzw. ein Verfahren zur Bearbeitung mehrer Ritzelwellen gemäß Fig. 12 bis Fig. 14. Dabei werden in einem Arbeitgang bzw. Verfahrensschritt insgesamt mehrere Zahnzwischenräume gleichzeitig bearbeitet. Dazu sind mehrere Elektroden 419a, 419b, 419c, 419d, 419e mittels einer leitenden Trägerbrücke 480 fest miteinander verbunden. Die Elektroden 419a, 419b, 419c, 419d, 419e sind im gleichen Maße zueinander beabstandet und parallel zueinander ausgerichtet. Die Bearbeitung erfolgt in analoger Weise zum Ausführungsbeispiel gemäß Fig. 12 bis Fig. 14, wobei jedoch die gesamte Einheit bestehend aus Trägerbrücke 480 und Elektroden 419a, 419b, 419c, 419d, 419e gemeinsamen verschoben wird, so dass jeweils eine Elektrode 419a bzw. 419b bzw. 419c bzw. 419d bzw. 419e in den dieser zugeordneten Zahnzwischenraum eingetaucht wird. Im Anschluss werden sämtliche Elektroden 419a, 419b, 419c, 419d, 419e mittels der Trägerbrücke 480 aus den Zahnzwischenräumen herausgezogen. Daraufhin werden sämtliche Ritzelwellen 425a, 425b, 425c, 425d, 425e, die in der Bearbeitungsmaschine sychron miteinander verbunden sind, um einen Zahnzwischenraum weitergedreht. Im Anschluss wird der nächste Zahnzwischenraum fertigbearbeitet. Diese Bearbeitungsschritte werden so lange zyklisch durchlaufen, bis sämtliche Laufverzahnungen der Ritzelwellen 425a, 425b, 425c, 425d, 425e komplett bearbeitet sind. Bei diesen Bearbeitungsvorgang ist die Bearbeitungsmaschine mit sehr engen Toleranzen ausgeführt, da die Spülspalte zwischen
- den Elektroden 419a, 419b, 419c, 419d, 419e und
- den Laufverzahnungen bzw. Versteifungsdeckeln der Ritzelwellen 425a, 425b, 425c, 425d, 425e
sehr eng sind. Diese enge Toleranz bzw. quasi-Spielfreiheit ist insbesondere bei den synchron zueinander bewegten Bauteilen vorhanden. Zum einen werden die Ritzelwellen 425a, 425b, 425c, 425d, 425e synchron zueinander gedreht und zum anderen werden die Elektroden 419a, 419b, 419c, 419d, 419e synchron zueinander in die Zahnzwischenräume geschoben bzw. wieder herausgezogen.

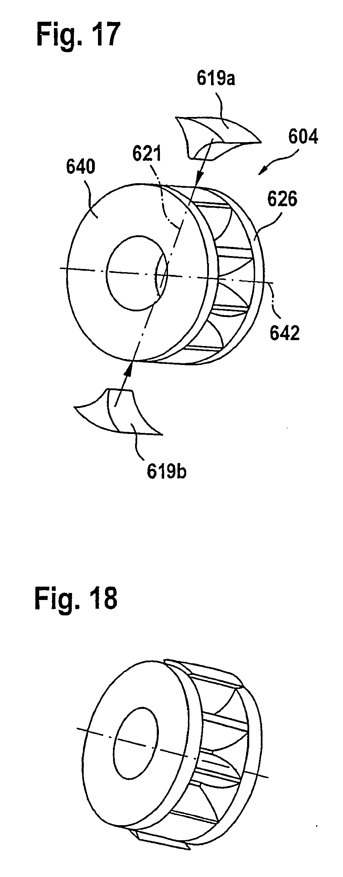

Fig. 17 und Fig. 18 zeigen ein beidseitig mit Verstärkungsdeckeln versehenes Zahnrad 604, welches von zwei diametral zueinander liegenden Elektroden 619a, 619b angefahren wird. Ein solches beidseitig mit Verstärkungsdeckeln 626, 640 versehenes Zahnrad 604 kann beispielsweise Einsatz als Ausgleichsrad 4a eines Kronenradausgleichsgetriebes 1 finden, wie dies in Fig. 3 und Fig. 4 dargestellt ist. Die Bearbeitung des Zahnrades 604 erfolgt, indem die beiden Elektroden 619a, 619b, welche die Form eines Zahnzwischenraumes haben, entlang einer Bewegungsgeraden 621, welche senkrecht durch die Rotationsachse 642 des Zahnrades 604 verläuft, aufeinander zugeschoben werden, bis die beiden Elektroden 619a, 619b nur noch einen Spülspalt von den Zahnflanken bzw. den Innenseiten der Verstärkungsdeckel 626, 640 entfernt sind. Im Anschluss wird der elektrochemische Bearbeitungsprozess durchgeführt. Darauf werden beide Elektroden 619a, 619b wieder entlang der Bewegungsgeraden 621 aus den Zahnzwischenräumen herausgezogen und das Zahnrad 604 um einen Zahnzwischenraum weitergedreht. Die Verwendung von zwei Elektroden 619a, 619b anstelle einer einzigen Elektrode halbiert die Bearbeitungszeit. Dabei müssen die beiden Elektroden nicht diametral zueinander liegen. Es sind beliebige Winkel denkbar, welche die Zahnteilung des Zahnrads 604 zuäßt. Die diametrale Anordnung hat den Vorteil, dass radial außerhalb jeder Elektrode ein großer Bauraum für die Zuführmechanik der Bearbeitungsmaschine zur Verfügung steht.

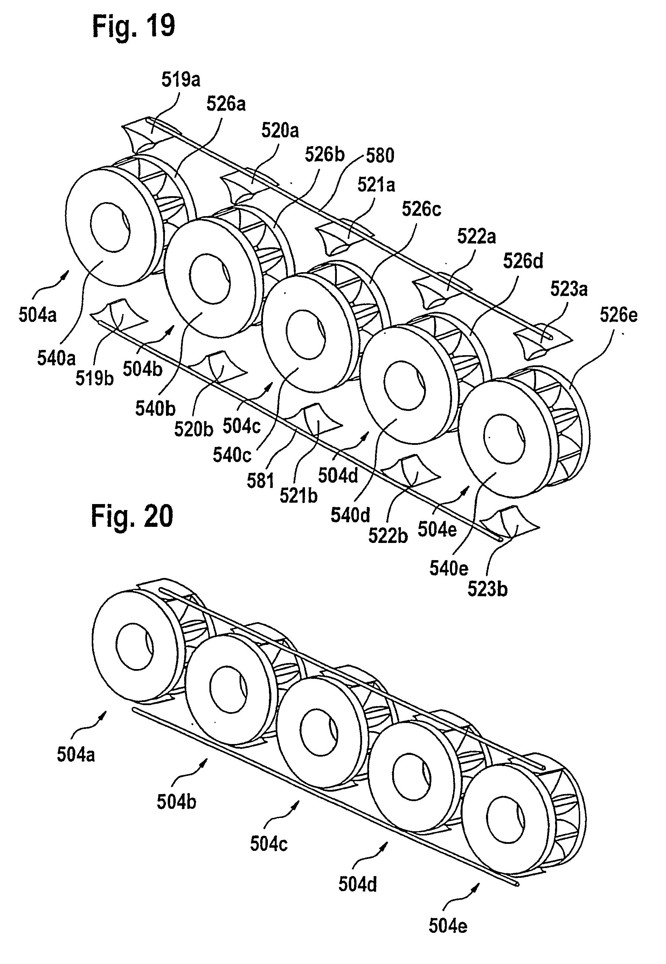

Fig. 19 und Fig. 20 zeigen Zahnräder 504a, 504b, 504c, 504d, 504e gemäß Fig. 17 und Fig. 18, welche beidseitig mit Verstärkungsdeckeln 526a, 540a, 526b, 540b, 526c, 540c, 526d, 540d, 526e, 540e, versehen sind, in einer Vorrichtung zur Mehrfachbearbeitung.

Dabei sind die jeweils einer Bearbeitungsseite zugeordneten Elektroden 519a, 520a, 521a, 522a, 523a bzw. 519b, 520b, 521b, 522b, 523b mittels einer ersten Trägerbrücke 580 bzw. 581 miteinander leitend verbunden. Eine andere Bearbeitungsseite liegt bezüglich den Längsachsen der Zahnräder 504a, 504b, 504c, 504d, 504e diametral gegenüber der ersten Bearbeitungsseite. Die jeweils der anderen Bearbeitungsseite zugeordneten Elektroden 519b, 520b, 521b, 522b, 523b bzw. 519a, 520a, 521a, 522a, 523a sind mittels einer zweiten Trägerbrücke 581 bzw. 580 miteinander leitend verbunden. Es erfolgt eine Bearbeitung der Zahnräder 504a, 504b, 504c, 504d, 504e analog dem Beispiel gemäß Fig. 15 und Fig. 16, wobei jedoch die beiden Trägerbrücken 580, 581 gleichzeitig die Elektroden 519b, 520b, 521b, 522b, 523b, 519a, 520a, 521a, 522a, 523a bis auf einen Spülspalt in die Zahnzwischenräume eingefahren, so dass entsprechend Fig. 17 und Fig. 18 eine Halbierung der Bearbeitungszeit gegenüber der einseitigen Bearbeitung erreicht wird.

Die in diesem Ausführungsbeispiel gezeigte mehrseitige Bearbeitung mehrerer Zahnräder gleichzeitig ist auch bei der Mehrfachbearbeitung der Ritzelwellen gemäß Fig. 15 und Fig. 16 möglich.

In sämtlichen Ausführungsbeispielen kann auch von drei oder mehr Seiten bearbeitet werden, so dass pro Zahnrad mehr als nur zwei Zahnzwischenräume gleichzeitig elektrochemisch endbearbeitet werden. Es kann - eine entsprechend segmentierte Führung vorausgesetzt - sogar die Bearbeitung von allen Seiten gleichzeitig erfolgen, so dass die Laufverzahnung eines kompletten Zahnrades in einem einzigen elektrochemischen Bearbeitungsschritt fertigbearbeitet wird.

Ein beidseitig verzahntes Tellerrad kann beidseitig mit jeweils einer Elektrode elektrochemisch bearbeitet werden, von denen jede Elektrode gemäß Fig. 1 und Fig. 2 ausgestaltet ist. Somit würden die beiden Elektroden das beidseitig verzahnte Tellerrad bis auf einen Spülspalt sandwichartig einschließen. Ein solches Tellerrad kann beispielsweise bei einem Differential bzw. Achsgetriebe besonders hohen Drehmomenten übertragen. Ein solches beidseitig verzahntes Tellerrad für ein Differential zeigt die nicht vorveröffentlichte DE 103 39 423.0. Dieses Tellerrad kann sowohl mit einer Kronenradverzahnung als auch mit einer Kegelradverzahnung ausgeführt sein. Das beidseitig elektrochemisch bearbeitete Tellerrad kann aber auch in anderer Funktion Anwendung finden.

In einer alternativen Ausgestaltung der Ausgestaltungsbeispiele gemäß Fig. 12 bis Fig. 20 kann die Laufverzahnung der Ritzelwelle bzw. des Zahnrades auch schon teilweise weitergedreht werden, während die Elektrode noch nicht ganz herausgezogen ist. Damit kann dieser in mehreren Bearbeitungsschritten durchzuführende elektrochemische Bearbeitungsvorgang beschleunigt werden, da die Zeiträume der Gesamtbearbeitung, in denen kein elektrochemischer Abtrag erfolgt, verkürzt werden.

Sämtliche Zahnräder aus sämtlichen Ausführungsbeispielen können für sämtliche Zwecke als Laufverzahnung Anwendung finden. Insbesondere kann die Laufverzahnung als Stirnverzahnung, als Kegelverzahnung, als Geradverzahnung, als Schrägverzahnung, als Spiralverzahnung, wie beispielsweise ein Hypoidverzahnung und als Kronenradverzahnung Anwendung ausgeführt sein. Auch ist die Anwendung bei Zahnstangen und innenverzahnten Hohlrädern möglich, wie letztere beispielweise bei Planetengetrieben Anwendung finden. Bei sämtlichen der genannten Verzahnungstypen ermöglicht das erfindungsgemäße Herstellungsverfahren auch ein Versteifungsdeckel oder eine Versteifungsrippe zur Erhöhung der Steifigkeit.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile, sind den in den Zeichnungen dargestellten Geometrien der Vorrichtungsteile zu entnehmen.

## Patentansprüche

1. Herstellungsverfahren für eine Laufverzahnung (20, 120, 220, 320), deren Oberfläche zumindest teilweise einer elektrochemischen Abtragung entstammt,
**dadurch gekennzeichnet,**
**dass** die Laufverzahnung (20, 120, 220, 320)
in einem ersten Verfahrensschritt vorgeschmiedet oder vorgegossen und
in einem folgenden Verfahrensschritt elektrochemisch weiterbearbeitet wird, wobei eine Elektrode (19, 119, 219, 319) eine Negativform eines einzelnen Zahnzwischenraumes aufweist und zur elektrochemischen Bearbeitung an die Laufverzahnung (20, 120, 220, 320) bis auf einen Spülspalt herangefahren wird.

2. Herstellungsverfahren nach Patentanspruch 1,
**dadurch gekennzeichnet,**
**dass** der erste Verfahrensschritt mit einem Aufmaß durchgeführt wird.

3. Herstellungsverfahren nach einem der Patentansprüche 1 oder 2,
**dadurch gekennzeichnet,**
**dass** für den folgenden Verfahrensschritt eine Elektrode (19, 119, 219, 319) bis auf einen Spülspalt in zumindest einen Zahnzwischenraum der Laufverzahnung (20, 120, 220, 320) geführt wird, wobei sich die Laufverzahnung (20, 120, 220, 320) in einem Elektrolytbad befindet.

4. Herstellungsverfahren nach Patentanspruch 3,
**dadurch gekennzeichnet,**
**dass** zwischen der Laufverzahnung (20, 120, 220, 320) und der Elektrode (19, 119, 219, 319) eine Spannung angelegt wird.

5. Herstellungsverfahren nach einem der Patentansprüche 3 oder 4,
**dadurch gekennzeichnet,**
**dass** die Elektrode (19, 119, 219, 319) eine Negativform der gesamten Laufverzahnung (20, 120, 220, 320) aufweist und die Laufverzahnung in einer Maschinenaufspannung bearbeitet.

6. Herstellungsverfahren nach Patentanspruch 5,
**dadurch gekennzeichnet,**
**dass** die Laufverzahnung (20, 120, 220) einem Zahnrad (18, 118, 225) zugehörig ist und die Elektrode (19, 119, 219) der Laufverzahnung (20, 120, 220) zur Bearbeitung im folgenden Verfahrensschritt bezüglich einer Rotationsachse (230) des Zahnrades (Tellerrad 18, Tellerrad 118, Ritzelwelle 225) der Laufverzahnung (20, 120, 220) in einer Relativbewegung axial zugeführt wird.

7. Herstellungsverfahren nach Patentanspruch 6,
**dadurch gekennzeichnet,**
**dass** die Laufverzahnung (220) eine Schräg- oder Spiralverzahnung ist und die Elektrode (219) bei der relativen axialen Zuführung entsprechend der Schräg- bzw. Spiralverzahnung relativgedreht wird.

8. Herstellungsverfahren nach einem der Patentansprüche 3 bis 5,
**dadurch gekennzeichnet,**
**dass** die Elektrode (219) die Negativform eines einzigen Zahnzwischenraumes aufweist.

9. Herstellungsverfahren nach Patentanspruch 8,
**dadurch gekennzeichnet,**
**dass** mehrere Elektroden (619a, 619b) mit der Negativform eines einzigen Zahnzwischenraumes vorgesehen sind, die der Laufverzahnung zur elektrochemischen Bearbeitung gleichzeitig zugeführt werden.

10. Herstellungsverfahren nach einem der Patentansprüche 8 oder 9,
**dadurch gekennzeichnet,**
**dass** die Elektrode (319, 619a, 619b) der Laufverzahnung (320) radial zugeführt wird.

11. Herstellungsverfahren nach Patentanspruch 9,
**dadurch gekennzeichnet,**
**dass** die Elektroden (419a, 419b, 419c, 419d, 419e) leitend miteinander verbunden sind.

12. Herstellungsverfahren nach Patentanspruch 1,
**dadurch gekennzeichnet, dass**
in Zahnzwischenräumen der Laufverzahnung (120, 220, 320) eine Verstärkungsrippe einteilig an Zähne der Laufverzahnung (120, 220, 320) geformt ist.

13. Herstellungsverfahren nach Patentanspruch 12,
**dadurch gekennzeichnet,**
**dass** sich an zumindest einem stirnseitigen Enden von Zähnen der Laufverzahnung (320) eine Verstärkungsrippe (340, 326) zwischen Zähnen der Laufverzahnung (320) erstreckt.

14. Herstellungsverfahren nach einem der Patentansprüche 12 bis 13,
**dadurch gekennzeichnet,**
**dass** die Laufverzahnung (220) einem Zahnrad (225) zugehörig ist, auf welches stirnseitig eine Elektrode (219) aufsetzbar ist, die eine Ausnehmung (232) mit einer Innenverzahnung aufweist, welche die Negativform der gesamten Laufverzahnung (220) bildet.

15. Herstellungsverfahren nach Patentanspruch 14,
**dadurch gekennzeichnet,**
**dass** die Laufverzahnung (220) eine Spiralverzahnung ist.

16. Herstellungsverfahren nach einem der Patentansprüche 11 bis 13,
**dadurch gekennzeichnet,**
**dass** die Laufverzahnung (20, 120) einem Tellerrad (18, 118) zugehörig ist, auf welches eine Elektrode (19) aufsetzbar ist, die stirnseitig eine Verzahnung aufweist, welche die Negativform der gesamten Laufverzahnung (20, 120) bildet.

17. Herstellungsverfahren nach Patentanspruch 16,
**dadurch gekennzeichnet,**
**dass** das Tellerrad (118) eine umlaufende Versteifungsrippe (123) aufweist.

18. Herstellungsverfahren nach Patentanspruch 15 oder 16,
**dadurch gekennzeichnet,**
**dass** das Tellerrad (18, 118) einteilig an ein Ausgleichsgehäuse (3, 103) eines Differentials geformt ist.

19. Herstellungsverfahren nach Patentanspruch 12,
**dadurch gekennzeichnet,**
**dass** die Laufverzahnung einem Ausgleichsstirnrad (4a) eines Kronenraddifferentials (1) zugehörig ist, welches beidseitig mit Verstärkungsdeckeln (9a, 10a) versehen ist.

20. Herstellungsverfahren nach einem der Patentansprüche 12 bis 19,
**dadurch gekennzeichnet,**
**dass** die Oberfläche des Abwälzbereiches der Laufverzahnung einer elektrochemischen Abtragung entstammt.

## Claims

1. Method for the production of a toothed gearing (20, 120, 220, 320) having a surface which originates at least partially in an electrochemical machining process,
**characterised in that**
the toothed gearing (20, 120, 220, 320) is pre-forged or pre-cast in a first step and subjected to further, electrochemical processing in a subsequent step, an electrode (19, 119, 219, 319) having the negative form of a single tooth space and being advanced towards the toothed gearing (20,120, 220, 320) as far as a flushing gap for electrochemical machining.

2. Production method in accordance with claim 1,
**characterised in that**
the first step is carried out with an overmeasure.

3. Production method in accordance with one of claims 1 or 2,
**characterised in that**
for the subsequent step an electrode (19, 119, 219, 319) is fed as far as a flushing gap in at least one tooth space in the toothed gearing (20, 120, 220, 320), the toothed gearing (20, 120, 220, 320) being located in an electrolytic bath.

4. Production method in accordance with claim 3,
**characterised in that**
a voltage is applied between the toothed gearing (20, 120, 220, 320) and the electrode (19, 119, 219, 319).

5. Production method in accordance with one of claims 3 or 4,
**characterised in that**
the electrode (19, 119, 219, 319) has the negative form of the entire toothed gearing (20, 120, 220, 320) and machines the toothed gearing in one chucking cycle.

6. Production method in accordance with claim 5,
**characterised in that**
the toothed gearing (20, 120, 220) is associated with a toothed wheel (18, 118, 225), and the electrode (19, 119, 219) is fed axially to the toothed gearing (20, 120, 220) in a relative movement in relation to an axis of rotation (230) of the toothed wheel (ring gear (18), ring gear (118), pinion shaft (225)) of the toothed gearing (20, 120, 220) for machining in the subsequent step.

7. Production method in accordance with claim 6,
**characterised in that**
the toothed gearing (220) is a spiral or helical gearing and the electrode (219) is rotated relatively in accordance with the helical or spiral gearing during the relative axial feed.

8. Production method in accordance with one of claims 3 to 5,
**characterised in that**
the electrode (219) has the negative form of a single tooth space.

9. Production method in accordance with claim 8,
**characterised in that**
a plurality of electrodes (619a, 619b) with the negative form of a single tooth space are provided and are fed to the toothed gearing simultaneously for electrochemical machining.

10. Production method in accordance with one of claims 8 or 9,
**characterised in that**
the electrode (319, 619a, 619b) of the toothed gearing (320) is fed radially.

11. Production method in accordance with claim 9,
**characterised in that**
the electrodes (419a, 419b, 419c, 419d, 419e) are connected conductively to one another.

12. Production method in accordance with claim 1,
**characterised in that**
a reinforcing rib is formed in one piece to teeth of the toothed gearing (120, 220, 320) in tooth spaces in the toothed gearing (120, 220, 320).

13. Production method in accordance with claim 12,
**characterised in that**
a reinforcing rib (340, 326) extends between teeth of the toothed gearing (320) on at least end face of teeth of the toothed gearing (320).

14. Production method in accordance with one of claims 12 to 13,
**characterised in that**
the toothed gearing (220) is associated with a toothed wheel (225) on the end face of which it is possible to place an electrode (219) which has a recess (232) with internal toothing which represents the negative form of the entire toothed gearing (220).

15. Production method in accordance with claim 14,
**characterised in that**
the toothed gearing (220) is a helical gearing.

16. Production method in accordance with one of claims 11 to 13,
**characterised in that**
the toothed gearing (20, 120) is associated with a ring gear (18, 118) on which it is possible to place an electrode (19) which has teething on its end face which represents the negative form of the entire toothed gearing (20, 120).

17. Production method in accordance with claim 16,
**characterised in that**
the ring gear (118) has a circumferential reinforcing rib (123).

18. Production method in accordance with claim 15 or 16,
**characterised in that**
the ring gear (18, 118) is formed in one piece to a differential housing (3, 103) of a differential.

19. Production method in accordance with claim 12,
**characterised in that**
the toothed gearing is associated with a differential spur gear (4a) of a crown gear differential (1) which is provided with reinforcing covers (9a, 10a) on both sides.

20. Production method in accordance with one of claims 12 to 19,
**characterised in that**
the surface of the hobbing area of the toothed gearing originates in an electrochemical machining process.

## Revendications

1. Procédé de fabrication pour une denture de roulement (20, 120, 220, 320) dont la surface est issue au moins en partie d'un enlèvement électrochimique,
**caractérisé en ce que**
la denture de roulement (20, 120, 220, 320) est ébauchée à la forge ou par coulage dans une première étape de procédé, et dans une étape de procédé suivante, transformée de façon électrochimique, dans lequel une électrode (19, 119, 219, 319) présente une forme négative d'un entredent individuel et est rapprochée de la denture de roulement (20, 120, 220, 320) pour le traitement électrochimique jusqu'à un espace de balayage.

2. Procédé de fabrication selon la revendication 1, **caractérisé en ce que** la première étape de procédé est exécutée avec une surépaisseur.

3. Procédé de fabrication selon l'une quelconque des revendications précédentes 1 ou 2, **caractérisé en ce que** pour l'étape de procédé suivante, une électrode (19, 119, 219, 319) est amenée jusqu'à un espace de balayage dans au moins un entredent de la denture de roulement (20, 120, 220, 320), la denture de roulement (20, 120, 220, 320) se trouvant dans un bain d'électrolyte.

4. Procédé de fabrication selon la revendication 3, **caractérisé en ce qu'**entre la denture de roulement (20, 120, 220, 320) et l'électrode (19, 119, 219, 319), une tension est appliquée.

5. Procédé de fabrication selon l'une quelconque des revendications 3 ou 4, **caractérisé en ce que** l'électrode (19, 119, 219, 319) présente une forme négative de la denture de roulement (20, 120, 220, 320) entière et traite la denture de roulement dans une fixation de machine.

6. Procédé de fabrication selon la revendication 5, **caractérisé en ce que** la denture de roulement (20, 120, 220) appartient à une roue dentée (18, 118, 225), et **en ce que** pour le traitement au cours de l'étape de procédé suivante, l'électrode (19, 119, 219) de la denture de roulement (20, 120, 220) est amenée axialement dans un mouvement relatif par rapport à un axe de rotation (230) de la roue dentée (couronne de différentiel 18, couronne de différentiel 118, arbre de pignon 225) de la denture de roulement (20, 120, 220).

7. Procédé de fabrication selon la revendication 6, **caractérisé en ce que** la denture de roulement (220) est une denture hélicoïdale ou en spirale, et **en ce que** lors d'une avance axiale relative, l'électrode (219) subit une rotation relative selon la denture hélicoïdale ou en spirale.

8. Procédé de fabrication selon l'une quelconque des revendications 3 à 5, **caractérisé en ce que** l'électrode (219) présente la forme négative d'un seul entredent.

9. Procédé de fabrication selon la revendication 8, **caractérisé en ce que** plusieurs électrodes (619a, 619b) sont prévues avec la forme négative d'un seul entredent qui sont amenées en même temps à la denture de roulement pour le traitement électrochimique.

10. Procédé de fabrication selon l'une quelconque des revendications 8 ou 9, **caractérisé en ce que** l'électrode (319, 619a, 619b) est amenée radialement à la denture de roulement (320).

11. Procédé de fabrication selon la revendication 9, **caractérisé en ce que** les électrodes (419a, 419b, 419c, 419d, 419e) sont reliées ensemble en connexion conductrice.

12. Procédé de fabrication selon la revendication 1, **caractérisé en ce que** dans des entredents de la denture de roulement (120, 220, 320), une nervure de renforcement est formée intégralement sur des dents de la denture de roulement (120, 220, 320).

13. Procédé de fabrication selon la revendication 12, **caractérisé en ce qu'**au moins sur une extrémité frontale de dents de la denture de roulement (320), une nervure de renforcement (340, 326) s'étend entre des dents de la denture de roulement (320).

14. Procédé de fabrication selon l'une quelconque des revendications 12 à 13, **caractérisé en ce que** la denture de roulement (220) appartient à une roue dentée (225) sur laquelle une électrode (219) peut être posée du côté frontal, l'électrode présentant un évidement (232) avec une denture intérieure qui constitue la forme négative de la denture de roulement (220) entière.

15. Procédé de fabrication selon la revendication 14, **caractérisé en ce que** la denture de roulement (220) est une denture en spirale.

16. Procédé de fabrication selon l'une quelconque des revendications 11 à 13, **caractérisé en ce que** la denture de roulement (20, 120) appartient à une couronne de différentiel (18, 118) sur laquelle une électrode (19) peut être posée qui présente du côté frontal une denture qui constitue la forme négative de la denture de roulement (20, 120) entière.

17. Procédé de fabrication selon la revendication 16, **caractérisé en ce que** la couronne de différentiel (118) présente une nervure de stabilisation périphérique (123).

18. Procédé de fabrication selon la revendication 15 ou 16, **caractérisé en ce que** la couronne de différentiel (18, 118) est formée intégralement sur un boîtier de compensation (3, 103) d'un différentiel.

19. Procédé de fabrication selon la revendication 12, **caractérisé en ce que** la denture de roulement appartient à une roue droite de compensation (4a) d'un différentiel de couronne dentée (1) qui est muni des deux côtés de couvercles de renforcement (9a, 10a).

20. Procédé de fabrication selon l'une quelconque des revendications 12 à 19, **caractérisé en ce que** la surface de la zone de roulement de la denture de roulement est issue d'un enlèvement électrochimique.
